# EUROPEAN PATENT APPLICATION

(11) **EP 4 300 280 A1**
(43) Date of publication of application: **03.01.2024**
(21) Application number: 22865072.7
(22) Date of filing: 01.09.2022
(51) Int. Cl.: G06F 3/0489, G06F 3/04812, G06F 3/0482, G06F 3/04842, G06F 3/0486, G06F 3/0488, H04N 21/422

(54) **REMOTE CONTROLLER, DISPLAY APPARATUS FOR SETTING KEYS OF REMOTE CONTROLLER, AND METHODS THEREOF**

(30) Priority: 03.09.2021 KR 20210117681
(71) Applicant: Samsung Electronics Co., Ltd., Suwon-si, Gyeonggi-do 16677 (KR)
(72) Inventor: CHOI, Changwoo, Suwon-si, Gyeonggi-do 16677 (KR)
(74) Representative: Walaski, Jan Filip
(86) International application number: PCT/KR2022/013123
(87) International publication number: WO 2023/033570

(57) **Abstract**

A display apparatus is provided. The display apparatus includes a first communicator connected to a remote controller, a second communicator connected to an external device, a display, a memory, and a processor, wherein the processor is configured to control, based on a user interface (UI) display command for key setting of the remote controller being received from the external device through the second communicator, based on UI data stored in the memory, the display to display a UI screen including a touchpad image and a plurality of keys of the remote controller, and based on at least one key among the plurality of keys on the UI screen being moved onto the touchpad image, respectively, according to a user operation input through the external device, transmit key information of the at least one key and a moved position of each of the at least one key to the remote controller through the first communicator.

## Description

### [Technical Field]

The disclosure relates to a remote controller configured to display keys, a display apparatus for setting keys displayed on the remote controller, and methods thereof.

### [Background Art]

With the development of electronic technology, it is common to use a remote controller to control not only televisions (TVs) but also various home appliances. Generally, a remote controller has a plurality of keys, and when a user presses one key, a control signal corresponding to a key value of the key is output. A remote controller equipped with a radio frequency (RF) transmitter outputs a control signal in a form of an RF signal, but recently, a remote controller that outputs a control signal through a Bluetooth communication method has also been used.

In conventional remote controllers, positions and functions of keys are set according to specifications set by a manufacturer. When a home appliance has various functions, it is implemented to operate multiple times through a user interface (UI) provided in the home appliance since it is impossible to provide all keys mapped to all functions in a small remote controller body.

For example, in a case of a TV, a user had to select a higher-level menu in an initial UI and sequentially select lower-level menus to find a desired function in order to select a desired lower-level function. In order to solve this inconvenience, a remote controller having a shortcut key directly mapped to a desired function has also been developed, but there is a problem in that a process of mapping a function to the shortcut key of the remote controller is inconvenient.

Particularly, since functions of recent home appliances are very various, an inconvenience of having to go through several operations to find a function desired by the user has increased.

Thus, a need for a method to solve this inconvenience has emerged. The above information is presented as background information only to assist with an understanding of the disclosure. No determination has been made, and no assertion is made, as to whether any of the above might be applicable as prior art with regard to the disclosure.

### [Disclosure]

### [Technical Problem]

Aspects of the disclosure are to address at least the above-mentioned problems and/or disadvantages and to provide at least the advantages described below. Accordingly, an aspect of the disclosure is to provide a display apparatus and a remote controller through which the user can quickly and easily set a key of a remote controller, and methods for setting thereof.

### [Technical Solution]

Additional aspects will be set forth in part in the description which follows and, in part, will be apparent from the description, or may be learned by practice of the presented embodiments.

In accordance with an aspect of the disclosure, a display apparatus is provided. The display apparatus includes a first communicator connected to a remote controller, a second communicator connected to an external device, a display, a memory, and a processor, wherein the processor is configured to control, based on a UI display command for key setting of the remote controller being received from the external device through the second communicator, based on UI data stored in the memory, the display to display a UI screen including a touchpad image and a plurality of keys of the remote controller, and based on at least one key among the plurality of keys on the UI screen being moved onto the touchpad image, respectively, according to a user operation input through the external device, transmit key information of the at least one key and a moved position of each of the at least one key to the remote controller through the first communicator.

The memory may store fixed key values of keys determined as default among keys corresponding to each of all functions provided by the display apparatus, and wherein the processor is configured to generate, based on a key other than the keys determined as default being moved onto the touchpad image, a key value of the moved key as an arbitrary key value except for the fixed key value.

The processor may align all keys used for controlling the display apparatus according a predetermined alignment criterion and display all the keys, and generate the UI screen to display a touchpad image corresponding to the touchpad of the remote controller next to one side of all the keys.

The processor may generate, based on a key corresponding to an upper menu including a plurality of submenus being selected from among the plurality of keys displayed on the UI screen, the UI screen to display a plurality of keys corresponding to the plurality of submenus.

The external device may be a mobile device, and wherein the processor is configured to control the display to move, based on a touch operation being input in the mobile device, a cursor on the UI screen according to the touch operation, and display, based on a drag-and-drop operation being input in the mobile device in a state that the cursor is displayed on one key, a movement of the one key according to the drag-and-drop operation.

In accordance with another aspect of the disclosure, a method of setting a remote controller key of a display apparatus is provided. The method includes connecting communication with an external device and a remote controller, respectively, displaying, based on a UI display command for key setting of the remote controller being received from the external device, a UI screen including a touchpad image and a plurality of keys of the remote controller, based on at least one key among the plurality of keys on the UI screen being moved onto the touchpad image, respectively, according to a user operation input through the external device, displaying the at least one key at a moved position in the touchpad image, respectively, and transmitting key information of the at least one key and a moved position of each of the at least one key to the remote controller.

The method may include generating, based on a key other than keys determined as default among keys corresponding to each of all functions provided by the display apparatus being moved onto the touchpad image, a key value of the moved key as an arbitrary key value except for the fixed key value set for the keys determined as default.

The UI screen may align all keys used for controlling the display apparatus according a predetermined alignment criterion and display all the keys, and display the touchpad image next to one side of all the keys.

The method may include generating, based on a key corresponding to an upper menu including a plurality of submenus being selected from among the plurality of keys displayed on the UI screen, the UI screen to display a plurality of keys corresponding to the plurality of submenus.

The displaying the at least one key at a moved position on the touchpad image may include moving, based on a touch operation being input in the mobile device connected to the display apparatus, a cursor on the UI screen according to the touch operation, and displaying, based on a drag-and-drop operation being input in the mobile device in a state that the cursor is displayed on one key, a movement of the one key according to the drag-and-drop operation.

In accordance with another aspect of the disclosure, a remote controller is provided. The remote controller includes a communicator capable of being connected to a display apparatus, a touchpad, a memory, and a processor, wherein the processor is configured to store, based on a key setting function being executed and key information of at least one key and position information of the at least one key being received from the display apparatus through the communicator, the received key information and position information in the memory, and control the touchpad to display the at least one key at a position corresponding to the position information based on the stored information, and wherein the processor is configured to identify, based on a touch operation being input to the touchpad, position information corresponding to a touched point, identify a key value corresponding to the identified position information from the memory, and transmit a control signal corresponding to the identified key value to the display apparatus through the communicator.

In accordance with another aspect of the disclosure, a recording medium storing a program for performing a method of setting a remote controller key of a display apparatus is provided. The method includes displaying a UI screen including a touchpad image and a plurality of keys of a remote controller, displaying, based on at least one key among the plurality of keys on the UI screen being moved, respectively, onto the touchpad image according to a user operation input through an external device connected to the display apparatus, the at least one key at a moved position in the touchpad image, and transmitting key information of the at least one key and a moved position of each of the at least one key to the remote controller.

The remote controller key setting method may further include generating, based on a key other than keys determined as default among keys corresponding to each of all functions provided by the display apparatus being moved onto the touchpad image, a key value of the moved key as an arbitrary key value except for the fixed key value set for the keys determined as default.

The remote controller key setting method may further include generating, based on a key corresponding to an upper menu including a plurality of submenus being selected from among the plurality of keys displayed on the UI screen, the UI screen to display a plurality of keys corresponding to the plurality of submenus.

The plurality of keys displayed in the UI screen may be moved and displayed on the touchpad image according to a drag and drop operation input from a mobile device connected to the display apparatus.

In accordance with another aspect of the disclosure, a display apparatus is provided. The display apparatus includes a communicator connected to a remote controller, a display, a memory, and a processor, wherein the processor is configured to control, based on a UI display command for key setting of the remote controller being received from the remote controller through the communicator, based on UI data stored in the memory, the display to display a UI screen including a touchpad image and a plurality of keys of the remote controller, and based on at least one key among the plurality of keys on the UI screen being moved onto the touchpad image, respectively, according to a user operation input through the remote controller, transmit key information of the at least one key and a moved position of each of the at least one key to the remote controller through the communicator.

According to various embodiments as described above, the user can easily and quickly set a key provided by a remote controller while looking at a screen of a display apparatus.

Other aspects, advantages, and salient features of the disclosure will become apparent to those skilled in the art from the following detailed description, which, taken in conjunction with the annexed drawings, discloses various embodiments of the disclosure.

### [Description of Drawings]

The above and other aspects, features, and advantages of certain embodiments of the disclosure will be more apparent from the following description taken in conjunction with the accompanying drawings, in which:
FIG. 1 is a view illustrating an operation of a display apparatus according to an embodiment of the disclosure;
FIG. 2 is a block diagram illustrating a configuration of a display apparatus according to an embodiment of the disclosure;
FIG. 3 is a block diagram illustrating a configuration of a remote controller according to an embodiment of the disclosure;
FIG. 4 is a view illustrating an operation of a mobile device according to an embodiment of the disclosure;
FIG. 5 is a view illustrating an example of a method of setting a key using a mobile device of FIG. 4 according to an embodiment of the disclosure;
FIG. 6 is a view illustrating another example of a method of setting a key using a mobile device according to an embodiment of the disclosure;
FIG. 7 is a view illustrating an example of a method of setting a key using a remote controller according to an embodiment of the disclosure;
FIGS. 8, 9, and 10 are views illustrating a UI screen configuration according to various embodiments of the disclosure;
FIG. 11 is a flowchart illustrating a method for setting a remote controller key of a display apparatus according to an embodiment of the disclosure; and
FIG. 12 is a flowchart illustrating a method of setting a remote controller key of a remote controller according to an embodiment of the disclosure.

Throughout the drawings, it should be noted that like reference numbers are used to depict the same or similar elements, features, and structures.

### [Best Mode]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In describing embodiments, detailed description of relevant known functions or components may be omitted if it would obscure the description of the subject matter.

In addition, the embodiments may be changed in various forms, and therefore, the technical scope is not limited to the following embodiments. Rather, these embodiments are provided to make the disclosure thorough and complete.

The terms used herein are solely intended to explain a specific embodiment, and not to limit the scope of the disclosure. Singular forms are intended to include plural forms unless the context clearly indicates otherwise.

In the disclosure, the terms "include" and "comprise" designate the presence of features, numbers, steps, operations, components, elements, or a combination thereof that are written in the specification, but do not exclude the presence or possibility of addition of one or more other features, numbers, steps, operations, components, elements, or a combination thereof.

In the description, the term "A or B", "at least one of A or/and B", or "one or more of A or/and B" may include all possible combinations of the items that are enumerated together. For example, the term "A or B" or "at least one of A or/and B" may designate (1) at least one A, (2) at least one B, or (3) both at least one A and at least one B.

The expression "1", "2", "first", or "second" as used herein may modify a variety of elements, irrespective of order and/or importance thereof, and only to distinguish one element from another. Accordingly, without limiting the corresponding elements.

When an element (e.g., a first element) is "operatively or communicatively coupled with/to" or "connected to" another element (e.g., a second element), an element may be directly coupled with another element or may be coupled through the other element (e.g., a third element).

On the other hand, when an element (e.g., a first element) is "directly coupled with/to" or "directly connected to" another element (e.g., a second element), an element (e.g., a third element) may not be existed between the other element.

In the description, the term "configured to" may be changed to, for example, "suitable for", "having the capacity to? "designed to", "adapted to", "made to", or "capable of" under certain circumstances. The term "configured to (set to)" does not necessarily mean "specifically designed to" in a hardware level.

Under certain circumstances, the term "device configured to" may refer to "device capable of" doing something together with another device or components. For example, the processor configured to perform "A, B, and C" may be realized a dedicated processor for performing functions (for example, embedded processor) or a generic-purpose processor for performing functions by running one or more software programs stored in a memory device (for example, a central processing unit (CPU) or an application processor).

In the embodiments disclosed herein, a term 'module' or 'unit' refers to an element that performs at least one function or operation. The 'module' or 'unit' may be realized as hardware, software, or combinations thereof. In addition, a plurality of 'modules' or 'units' may be integrated into at least one module and may be realized as at least one processor in an integrated manner except for 'modules' or 'units' that should be realized in specific hardware.

Further, various elements and areas in the drawings are schematically drawn. Therefore, the technical ideas are not limited by a relative size or interval drawn in the accompanying drawings.

Hereinbelow, various example embodiments of the disclosure will be described in greater detail with reference to the accompanying drawings.

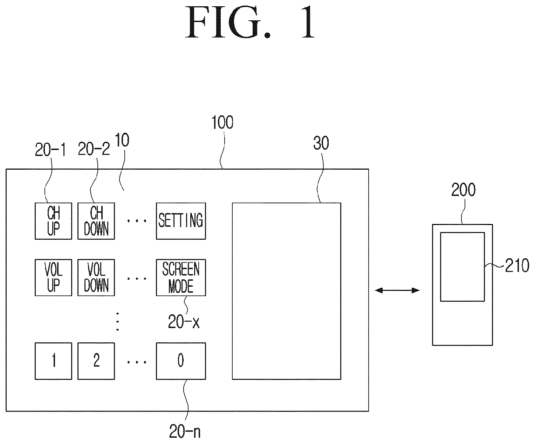

FIG. 1 is a view illustrating an operation of a display apparatus according to an embodiment of the disclosure.

Referring to FIG. 1, the display apparatus may be implemented as a TV, but is not limited thereto, and the embodiment may be implemented in various electronic apparatuses having a display. For example, in addition to regular TVs, it may be implemented as large format display (LFD), digital signage (DS), digital information display (DID), video wall, projector display, refrigerator, washing machine, air conditioner, vacuum cleaner, smart speaker, kiosk, and the like. In addition, the embodiment may be implemented in a set-top box or other control device connected to the display apparatus. Hereinafter, it will be referred to as a display apparatus for convenience of description.

Referring to FIG. 1, the display apparatus 100 may communicate with a remote controller 200. The remote controller 200 may include a touchpad 210. An image corresponding to a key of the remote controller 200 may be displayed on the touchpad 210. Such an image may also be referred to as a soft key or soft button, but may be referred to as a key in the disclosure.

The display apparatus 100 may display an image corresponding to the touchpad 210 of the remote controller 200, that is, a touchpad image 30, and a UI screen 10 including a plurality of keys 20-1, 20-2 to 20-n (n is a positive integer). The plurality of keys 20-1 to 20-n may refer to images of keys necessary for controlling the display apparatus 100. For example, various numeric keys, a power key, an external input mode selection key, a channel up/down key, a volume up/down key, a menu key, a confirmation key, and the like may be included.

The display apparatus 100 may move and display at least one of the plurality of keys 20-1 to 20-n from the UI screen 10 to the touchpad image 30 according to a user operation. The display apparatus 100 may transmit key information of a key moved to the touchpad image 30 and information on a final moved position of the key to the remote controller 200. The key information may include information such as a name of the key, a key type, a key value, or the like. The remote controller 200 may store the transmitted information. The remote controller 200 may identify a point corresponding to the moved position of the key on the touchpad 210 and display the corresponding key at the point. As such, keys of the remote controller 200 may be set. When the setting is completed, the remote controller 200 may store setting information, and when the remote controller 200 is used, the keys may be displayed on the touchpad 210 based on the information.

A user operation for moving a key position in FIG. 1 may be implemented in various ways according to embodiments.

For example, a user operation may be input using a mobile device connected to the display apparatus 100 directly or indirectly through an external server or network.

As another example, if the display apparatus 100 itself supports a touch screen function, the user may set the remote controller key by directly selecting a key on the UI screen 10 and inputting a touch operation to move it onto the touchpad image 30.

As another example, a user operation may be input using the remote controller 200 itself.

In addition, the user may select a specific key and move it to a touchpad image 30 in a manner such as user's voice recognition, motion recognition, or the like. For example, in the case of a voice recognition method, when the user speaks the name of the specific key, it may be implemented to display the corresponding key at a point on the touchpad image 30, and recognize the user's voice indicating up, down, left and right to adjust a display position of the corresponding key. In the case of a motion recognition method, a cursor may be displayed on a screen according to a position of the user's palm, and when making a fist while the cursor is displayed over a specific key, the corresponding key may be selected. In this state, when the user moves the position of the fist, the display position of the key may be moved accordingly, and when the user opens the fist at a point on the touchpad image 30, the corresponding key may be fixedly displayed at that position.

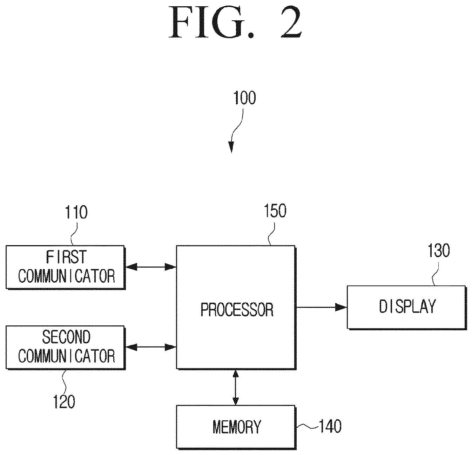

FIG. 2 is a block diagram illustrating a configuration of a display apparatus according to an embodiment of the disclosure.

Referring to FIG. 2, the display apparatus 100 may include a first communicator 110, a second communicator 120, a display 130, a memory 140, and a processor 150.

The first communicator 110 is a configuration for performing communication with the remote controller.

The second communicator 120 is a configuration for performing communication with an external device.

The communication method of the first and second communicators 110 and 120 may vary depending on specifications of the display apparatus and the remote controller. Specifically, communication may be performed using a communication method such as Wireless Fidelity (Wi-Fi), Wi-Fi direct, Bluetooth 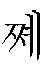 , ZigBee, wired/wireless local area network (LAN), wide area network (WAN), Ethernet, IEEE 1394, high-definition multimedia interface (HDMI), universal serial bus (USB), and the like. In this embodiment, the first communicator 110 may communicate with the remote controller 200 in a Bluetooth method, and the second communicator 120 may communicate with an external device through a Wi-Fi method or a wired/wireless LAN.

The display 130 is an element for displaying various screens. The display 130 may be implemented as a display including a self-luminous device or a display including a non-light-emitting device and a backlight. For example, it may be implemented as various forms such as liquid crystal display (LCD), organic light emitting diodes (OLED) display, light emitting diodes (LED), plasma display panel (PDP), quantum dot light-emitting diodes (QLED), or the like. Meanwhile, the display 130 may be implemented as a touch screen combined with a touch sensor, a flexible display, a rollable display, a three-dimensional display (three-dimensional (3D) display), a display in which a plurality of display modules are physically connected, and the like.

The display 130 may display a UI screen shown in FIG. 1 as well as various image screens processed by the processor 150.

The memory 140 is an element for storing various program and data required for an operation of the display apparatus 100. The memory 140 may be electrically connected to the processor 150 and store data required for various embodiments of the disclosure. The memory 140 may be implemented in the form of a memory embedded in the display apparatus 100 or may be implemented in the form of a memory that is detachable from the display apparatus 100 according to a purpose of data storage.

In the case of a memory embedded in the display apparatus 100, it may be implemented as at least one of a volatile memory (e.g., dynamic random access memory (RAM) (DRAM), static RAM (SRAM), or synchronous dynamic RAM (SDRAM), or the like), non-volatile memory (e.g., one time programmable read-only memory (ROM) (OTPROM), programmable ROM (PROM), erasable and programmable ROM (EPROM), electrically erasable and programmable ROM (EEPROM), mask ROM, flash ROM, flash memory (such as NAND flash or NOR flash), a hard drive, and a solid state drive (SSD). In addition, in the case of a memory detachable to the display apparatus 100, it may be implemented in a form such as a memory card (e.g., a compact flash (CF), secure digital (SD), micro secure digital (Micro-SD), mini secure digital (Mini-SD), extreme digital (xD), multi-media card (MMC), or the like), external memory that can be connected to a USB port (e.g. USB memory).

The processor 150 may be implemented as electrically connected to the memory 140 and execute at least one instruction stored in the memory 140 to perform operations according to various embodiments of the disclosure. Specifically, the processor 150 may be implemented as a digital signal processor (DSP) for processing a digital image signal, a microprocessor, a graphics processing unit (GPU), an artificial intelligence (AI) processor, a neural processing unit (NPU), time controller (TCON), but is not limited thereto, and may include one or more of a central processing unit (CPU), a micro controller unit (MCU), a micro processing unit (MPU), a controller, an application processor (AP), a communication processor (CP), an ARM processor, or may be defined by the corresponding term. The processor 150 may be implemented as a system on chip (SoC), large scale integration (LSI), or an application specific integrated circuit (ASIC) or field programmable gate array (FPGA) type having a built-in processing algorithm.

As described above, while the second communicator 120 is connected to the external device, the user of the external device may input a user command for setting a key of the remote controller. Accordingly, the processor 150 may receive a UI display command for key setting of the remote controller from the external device through the second communicator 120.

When the UI display command is received, the processor 150 may configure a touchpad image 30 of the remote controller 200 and the UI screen 10 including the plurality of keys 20-1 to 20-n based on UI data stored in the memory 140. The processor 150 may control the display 130 to display the UI screen 10.

When at least one key among the plurality of keys on the UI screen moves on the touchpad image 30, the processor 150 may transmit key information of the moved key and information on the moved position through the first communicator 110 to the remote controller. Information transmission may be performed immediately whenever one key is moved on the touchpad image 30, or may be performed collectively after all key movement operations are completed.

The key information may include a name of the key, a key value, and information on shape, size, color, or the like of the key displayed on the touchpad 210. The key value means a value for designating an operation of the display apparatus 100. The key value may be configured in various sizes and shapes for each manufacturer. For example, when configured with 0xFF 2-byte HEX code, key values may be set for a total of 255 keys. According to an embodiment, all key values of all keys for controlling the display apparatus 100 may be determined and stored in the memory 140, but when the total number of keys exceeds 255, key values of some keys may not be determined. Accordingly, in an embodiment, the memory 140 may store fixed key values set for some keys determined by default. The processor 150 may generate keys other than those keys as arbitrary key values except for the fixed key value. For example, a key value of 0x00 to 0x34 may be fixedly set for a power key, a volume up/down key, a channel up/down key, a direction adjustment key, a menu key, a confirmation key, a number key, etc. which are frequently used in the remote controller 200. In this state, if a key corresponding to a function such as "entering movie screen mode" is moved to the touchpad image 30, the processor 150 may generate the key value of the corresponding key as 0x35, which is a key value, not a fixed key value, and provide to the remote controller 200. New key values may be generated sequentially or randomly, except for the fixed key values.

The remote controller 200 may store the received information, and display various keys on the touchpad 210 based on the information.

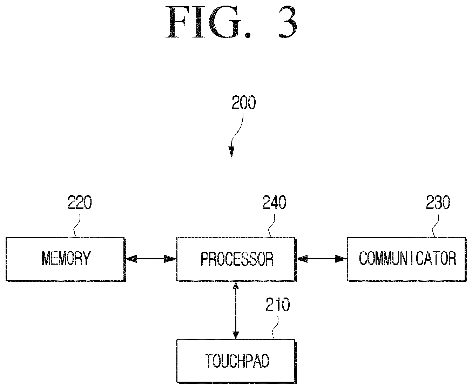

FIG. 3 is a block diagram illustrating a configuration of a remote controller according to an embodiment of the disclosure.

Referring to FIG. 3, the remote controller 200 may include a touchpad 210, a memory 220, a communicator 230, and a processor 240.

The touchpad 210 is an element having a display function and a touch function. The touchpad 210 may be composed of a display panel and a touch sensing panel. The display panel may be manufactured using one of various display apparatuses as described with reference to FIG. 2. The touch sensing panel may be disposed at the bottom of the display panel to detect whether each point of the display panel is touched.

The memory 220 may store various programs and data required for the operations of the remote controller. For example, the memory 220 may store key information of each key to be displayed on the touchpad 210, display position information, or the like.

The communicator 230 is an element for performing communication with the display apparatus 100. As described in FIG. 2, the communication method may be implemented as one of various methods, but, in the disclosure, it is assumed that communication is performed using the Bluetooth method.

The processor 240 may receive various types of key information received from the display apparatus 100 and position information to display the keys through the communicator 230. The processor 240 may store the received information in the memory 220. This remote controller key setting operation may be performed after Bluetooth pairing between the remote controller 200 and the display apparatus 100 is performed, and thereafter, may be performed at any time according to the user's request.

When the remote controller key setting operation is re-performed and new key information and position information are received, the processor 240 may update information stored in the memory 220 based on the received information. Accordingly, the newly modified keys may be displayed at predetermined positions on the touchpad 210.

A user who wants to use the remote controller may touch a key displayed on the touchpad 210. The processor 240 may identify position information corresponding to a touch point touched by the user, and identify a key value corresponding to the identified position information from the memory 220. The processor 240 may configure a control signal corresponding to the identified key value and transmit the control signal to the display apparatus 100 through the communicator 230. Accordingly, the display apparatus 100 may perform an operation desired by the user.

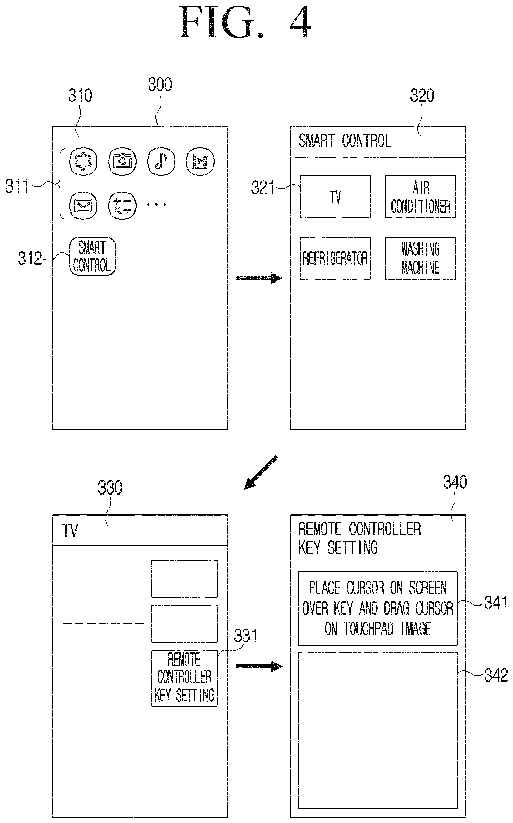

In the embodiments described above, the external device may be a mobile device such as a mobile phone, a tablet personal computer (PC), a laptop PC, a personal digital assistant (PDA), an e-book, a moving picture experts group phase 1 or phase 2 (MPEG-1 or MPEG-2) audio layer-3 (MP3) player, a smart speaker, or a device such as a relay server or a cloud server or the like. FIG. 4 illustrates an example of an operation of an external device implemented as a mobile device.

FIG. 4 is a diagram view illustrating an operation of a mobile device according to an embodiment of the disclosure. Although the mobile device may be implemented as a variety of products, FIG. 4 illustrates a case in which the mobile device is implemented as a mobile phone.

Referring to FIG. 4, a processor (not shown) of a mobile device 300 may display icons 311 and 312 of various applications installed in the memory (not shown) on the display 310. Among the applications, a control application for controlling operations of various electronic products installed in a specific environment (e.g., home or office, etc.) may be included. The control application may be connected to various electronic apparatuses in the environment through the Internet of Things (IoT), and may transmit/receive various control signals and data.

When the user selects an icon 312 corresponding to the control application, the mobile device may execute a control application and display an execution screen 320. Menus (e.g., TV, air conditioner, refrigerator, washing machine, etc.) for various electronic apparatuses controllable by the mobile device may be displayed on the execution screen 320. Assuming that the device providing the remote controller key setting function is a TV, when the user selects a TV menu 321, a remote controller key setting menu 331 may be displayed on a TV control screen 330. When the user selects the remote controller key setting menu 331, a UI screen 340 for setting the remote controller key may be displayed on a display 310 of the mobile device 300.

An operation area 342 for receiving a user operation may be displayed on the UI screen 340 together with various messages 341 for guiding a method for setting a remote controller key. The user may input a touch operation of touching a point of the operation area 342, a long touch operation of touching a point for a certain period of time or more, a continuous touch operation of continuously touching a point a plurality of times within a certain period of time, and a drag-and-drop operation for releasing touch after moving a touch point while being touched.

A processor of the mobile device 300 may perform communication connection with a TV when a TV menu 321 is selected on the execution screen 320 of the control application or when a specific menu is selected on a TV control screen 330. If the display apparatus described with reference to FIGS. 1 and 2 is implemented as a TV, communication may be connected through the second communicator 120 of the display apparatus 100. Communication connection may be made directly through a communication interface provided in the mobile device 300, but is not limited thereto, and may be indirectly made through a relay server or a cloud server. In this case, various control signals or data transmitted from the mobile device 300 may be received by the display apparatus 100 through the relay server or the cloud server.

When the remote controller key setting menu 331 is selected, the processor of the mobile device 300 may display the UI screen 340 for setting the remote controller key by itself, while transmitting a UI display command for setting the key of the remote controller to the display apparatus 100. The processor of the mobile device 300 may transmit a user operation input to the operation area 342 of the UI screen 340 for setting the remote controller key to the display apparatus 100. The display apparatus 100 may perform an operation of moving a cursor according to a user operation, specifying a key using the cursor to move the specified key onto a touchpad image, or moving the specified key out of the touchpad image again.

Referring to FIG. 4, the operation area 342 is illustrated and described as corresponding to a predetermined area within an entire display 310, but according to an embodiment, the entire display 310 of the mobile device 300 may be used as the operation area 342.

When a key of the remote controller is set using a mobile device and a display apparatus together as shown in FIG. 4, the user may conveniently set the key by controlling the mobile device familiar to a hand while viewing various keys through a wide screen.

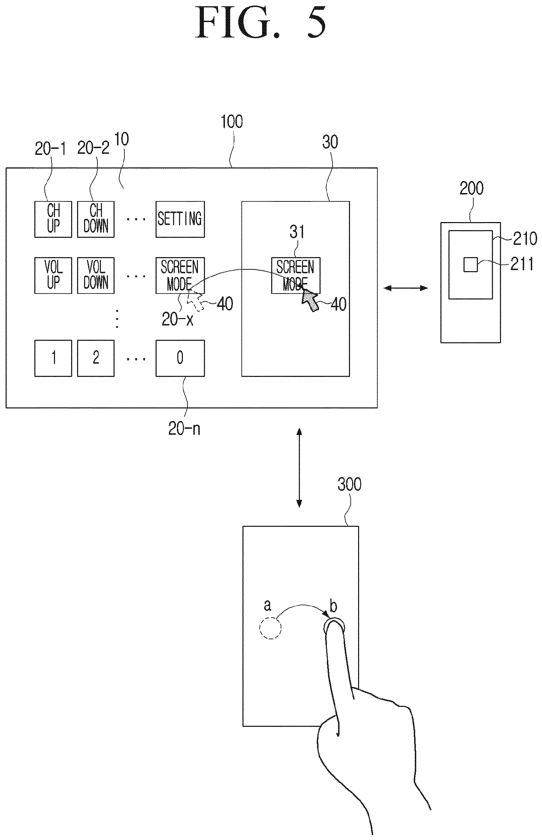

FIG. 5 is a view illustrating an example of a method of setting a key using the mobile device of FIG. 4 according to an embodiment of the disclosure.

Referring to FIG. 5, when a UI display command is input through the second communicator 120, the processor 150 of the display apparatus 100 may control the display 130 to display the UI screen 10 based on UI data stored in the memory 140. The UI data means data defining entire layout of the UI screen 10, display coordinates, characteristics, shapes, colors, properties, etc. of each graphic object in the screen. The UI data may be stored in advance by a manufacturing company of the display apparatus 100 when a product is manufactured or may be downloaded through an on/offline source.

When the UI screen 10 is displayed, the user may input a user operation by touching an operation area of the mobile device 300 while viewing the UI screen. The processor of the mobile device 300 may match respective coordinates of the operation area 342 and the UI screen of the display apparatus 100 1:1. For accurate matching, the processor of the mobile device 300 may generate an aspect ratio of the operation area 342 to match the UI screen 10 of the display apparatus 100. Accordingly, when a specific point in the operation area 342 is touched, the mobile device 300 may transmit coordinates of the touch point to the display apparatus 100, and the display apparatus 100 may display a cursor 40 at a position corresponding to the touch point within the UI screen 10.

When the user moves the touch point while the cursor is displayed, the display apparatus 100 may move the cursor according to a moving direction or distance. In a state where the cursor is displayed on one key, when the user touches the operation area 342, and inputs an operation that moves a touch point and releases the touch, that is, a drag and drop operation, the display apparatus 100 may display the corresponding key according to the drag and drop operation. As shown in FIG. 5, if an arbitrary point a is touched within the operation area of the mobile device 300 and a drag-and-drop operation is inputted to a point b, the display apparatus 100 may move a corresponding key 20-x itself together with the cursor 40 according to an operation direction and a distance. If the moved position is on the touchpad image 30, the processor 150 of the display apparatus 100 may fixedly display a key 31 at a final moved position on the touchpad image 30. Meanwhile, when moving out of the touchpad image 30, the key 20-x may be returned to its original position or displayed at the final moved position on the UI screen 10, depending on the embodiment.

Alternatively, according to an embodiment, a selection button may be displayed together on one side of the operation area 342. The selection button is a button for selecting a key on which the cursor is displayed. When a touch and drag operation is input while the selection button is pressed, the display apparatus 100 may move and display a display position of the corresponding key according to drag direction and distance. While the selection button is pressed, a state of the key selection may be maintained even if the touch is released. Accordingly, when an area of the operation area 342 is small, touch and drag operations may be performed several times while pressing the selection button to move the key to a desired position, and release the selection button to move the key to the final moved position.

After the key movement is made, the original key 20-x corresponding to the key 31 displayed on the touchpad image 30 may be deleted in the UI screen 10 or displayed in an inactive state by dropping saturation or brightness.

When the movement of the key 20-x on the touchpad image 30 is completed, the processor 150 of the display apparatus 100 may transmit various key information on the moved key and information on the moved position to the remote controller 200 through the first communicator 110. The processor 240 of the remote controller 200 may store the transmitted information in the memory 220.

Although FIG. 5 illustrates that, in a state in which movement of one key is completed, information on the key is provided to the remote controller 200, and a key 211 is displayed on a display apparatus 100 based on the information from the remote controller 200, it may be implemented to provide information to the remote controller 200 at once after performing a key movement operation several times.

An embodiment that can be implemented when the mobile device 300 is provided with a touch screen has been described in FIGS. 4 and 5, but key selection and movement are not necessarily performed in this way.

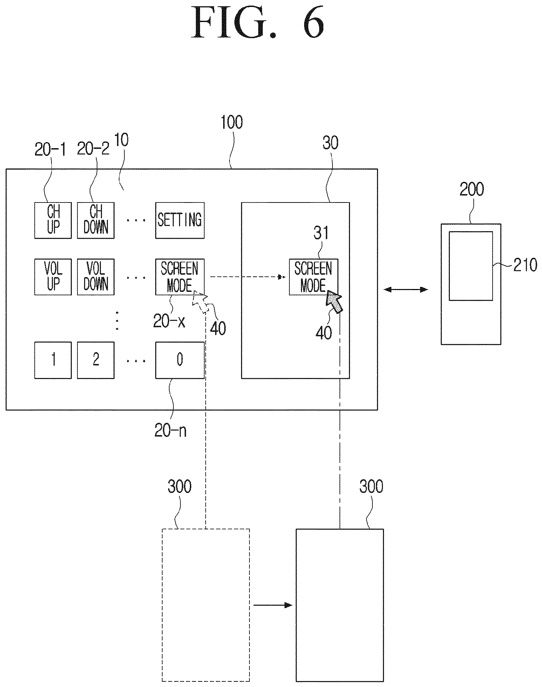

FIG. 6 is a view illustrating another example of a key setting method using a mobile device according to an embodiment of the disclosure.

Referring to FIG. 6, the mobile device 300 includes a geomagnetic sensor, a gyro sensor, an acceleration sensor, or the like. The mobile device 300 may calculate a pitch angle, a roll angle, and a yaw angle based on sensing values of these sensors. The mobile device 300 may detect a change in a posture of the mobile device 300 based on the calculated angles. The mobile device 300 may provide a detection result to the display apparatus 100, and the display apparatus 100 may change a display position of the cursor based on the detection result.

When the user faces a front end of the mobile device 300 toward the display apparatus 100 while the UI screen 10 is displayed on the display apparatus 100 as shown in FIG. 6, the display apparatus 100 may display the cursor 40 at a position to which the front end faces. In order to perform such an operation, an initial setting operation must be performed. Specifically, when the mobile device 300 is provided with a 3-axis geomagnetic sensor, output values of x, y, and z-axis sensors may be calculated, calibrated, and stored while the mobile device 300 is placed on a flat surface. Thereafter, when the user moves while holding the mobile device 300, a change in posture according to a change in the output values of the sensors are estimated based on the stored value. As illustrated in FIG. 6, when a specific hardware button or software button (not shown) of the mobile device 300 is selected while the cursor 40 is displayed on one key 20-x and moved to the right, the key 20-x is moved and displayed by a moving distance. In this way, the key 31 may be moved and displayed at a desired position on the touchpad image 30. When a specific hardware button or a software button (not shown) of the mobile device 300 is moved in an unselected state, only the cursor 40 may be moved.

Meanwhile, according to another embodiment of the disclosure, a user operation for setting a key may be input using the remote controller 200.

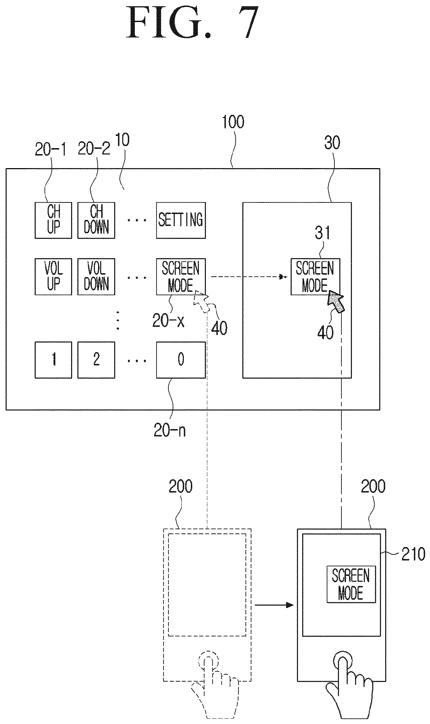

FIG. 7 is a view illustrating an example of a method of setting a key using a remote controller according to an embodiment of the disclosure. The display apparatus 100 may move a key on the UI screen 10 onto the touchpad image 30 according to a user operation input through the remote controller 200.

Referring to FIG. 7, the remote controller 200 may include the geomagnetic sensor, the gyro sensor, or the acceleration sensor described above with reference to FIG. 6, and provide the display apparatus 100 with a detection result of a posture change of the remote controller 200 detected through the sensor, and the display apparatus 100 may change a display position of the cursor 40 based on the detection result. For this operation, the remote controller 200 may include a selection button (hardware button or software button) for receiving an input of an operation for selecting a key on which the cursor 40 is displayed. As illustrated in FIG. 7, when the cursor 40 is displayed on one key 20-x and the selection button of the remote controller is selected and moved to the right, the key 20-x may be moved and displayed by the moving distance. Accordingly, the user may move and display the key 31 at a desired position on the touchpad image 30, and the remote controller 200 may receive key information and the moved position of the key moved from the display apparatus 100 through the communicator 230 to display the selected key at a corresponding position on the touchpad 210.

Meanwhile, although it has been illustrated and described that all keys of the remote controller 200 are set by the user in the above, there may be essential or frequently used keys in the remote controller 200 in an actual usage environment such as, specifically, a power key, an external input key, a mute key, a menu key, a direction key, or the like. Therefore, according to an embodiment, even when a remote controller key setting operation is performed, some keys may be displayed in a fixed manner.

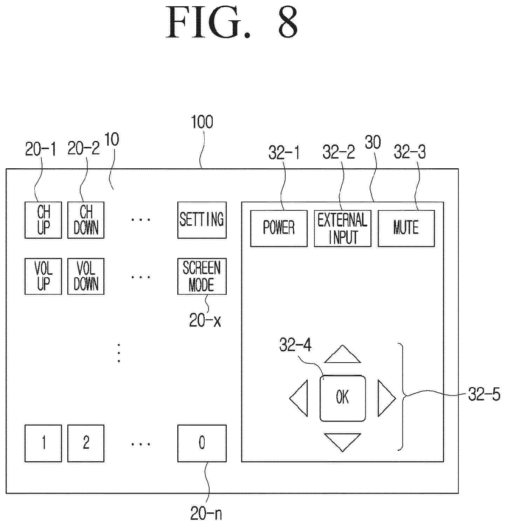

FIG. 8 is a view illustrating a method for setting a remote controller key according to an embodiment of the disclosure.

Referring to FIG. 8, a power key 32-1, an external input key 32-2, a mute key 32-3, and a confirmation key 32-4, direction keys 32-5 are displayed on the touchpad image 30 in the UI screen 10. These keys may be set such that a display position cannot be changed or deleted. The processor 150 of the display apparatus 100 may display keys other than these keys on the outside of the touchpad image 30 to support key setting in the manner described above. As described above, a fixed key value may be assigned to some keys determined by default. The keys fixedly displayed on the touchpad image 30 in FIG. 7 may be the default keys, but the disclosure is not limited thereto, and the default keys may also be displayed outside the touchpad image 30 allowing the user to arbitrarily determine.

According to these embodiments, it may avoid reconfiguration even keys that the user is supposed to set.

Meanwhile, among some keys, there may be keys corresponding to an upper menu including a plurality of lower menus. For example, in the case of a screen mode menu, there may be submenus such as movie mode, news mode, landscape mode, sports mode, or the like as submenus, and there may be submenus such as action movie, romance movie, sports movie, etc. in the movie mode.

If the size of the display 130 of the display apparatus 100 is large enough, it may be implemented to show all of these submenus on a single screen. In other words, the processor 150 of the display apparatus 100 may generate a UI screen to display all keys used to control the display apparatus and display the touchpad image 30 next to one side thereof. According to this embodiment, the user may directly select a key of a desired menu on one screen and move it to the remote controller 200 without going through several steps to find submenus. When all keys are displayed, or when more than a threshold value is displayed even if not all keys are displayed, the processor 150 may sort and display the keys according to a predetermined sorting criterion.

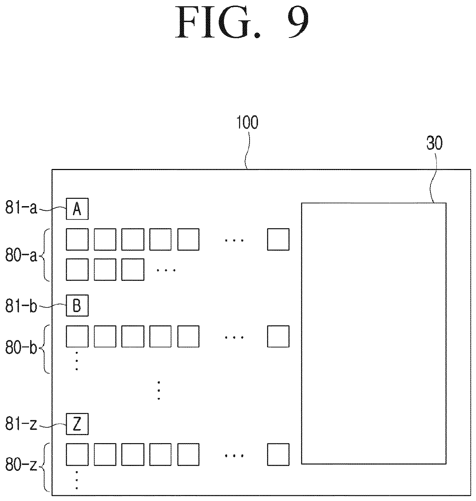

FIG. 9 shows a case in which all keys are arranged and displayed in alphabetical order according to an embodiment of the disclosure.

Referring to FIG. 9, the processor 150 may group and display keys having names starting with the alphabet on one side of indicators 81-a, 81-b to 81-z indicating each alphabet indicators 80-a, 80-b to 80-z. The indicator may be modified according to language of a country in which the display apparatus 100 is used. Also, the sorting criteria may be set in various ways. For example, keys may be sorted based on a frequently used order, or keys may be sorted based on an update order. As such, the user may easily find a key that the user wants by sorting according to a specific criterion.

When a total number of keys is too large to be viewed on one screen, upper and lower menus may be hierarchically displayed.

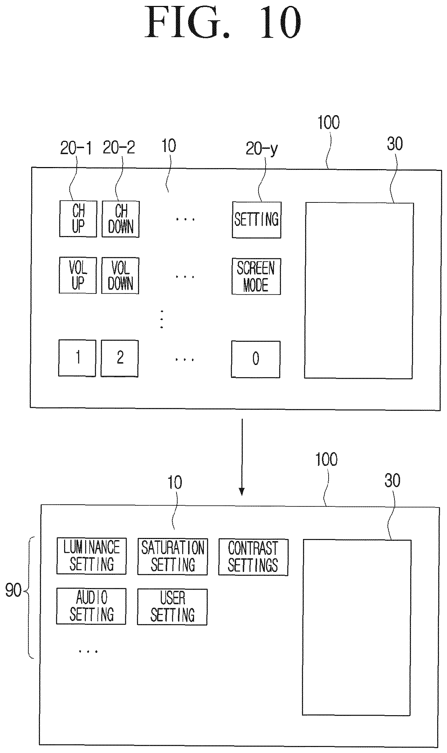

FIG. 10 shows screen changes when a key of an upper menu is selected according to an embodiment of the disclosure.

Referring to FIG. 10, when a key 20-y corresponding to a setting menu is selected on the UI screen 10 of the display apparatus 100, the processor 150 may generate a UI screen to display a plurality of keys 90 corresponding to submenus included in the setting menu. There may be submenus such as luminance setting, saturation setting, contrast setting, audio setting, user setting, or the like. If a key corresponding to a menu including a next submenu is selected from among these submenus, the processor 150 may configure the UI screen to display keys of the next submenu again.

Some users may prefer to search hierarchically rather than looking at many keys at once, and thus it may be designed to operate in the form shown in FIG. 10.

In addition, if it is difficult to see on one screen because a total number of keys is large, it may be divided into several pages and displayed separately. In addition, color, form, shape, background color, or the like of the corresponding keys may be displayed differently according to properties of each menu. It may be displayed differently, for example, various setting menus such as screen mode setting, audio setting, or the like may be displayed with a green square key, a number key may be displayed with a white circular key, a direction key may be displayed with a yellow triangle key, or the like.

Examples of various key setting methods have been described with reference to FIGS. 8 to 10. At least some of these methods may be combined and implemented in one embodiment. For example, some keys may be fixed and displayed, while other keys may be displayed by sorting the other keys according to a predetermined alignment criterion. In addition, an uppermost menu and keys corresponding to lower menus may be arranged and displayed on one screen, and when a key of a submenu including a next submenu is selected, the next submenu may be displayed. In this case, inconvenience of searching for a menu in several operations may be minimized, and inconvenience of being difficult to find because too many keys are displayed on one screen may be minimized.

As described above, the configuration of the UI screen and key setting method may be combined and modified in various ways according to various criteria, such as a size of an entire screen, the number of keys, and user convenience.

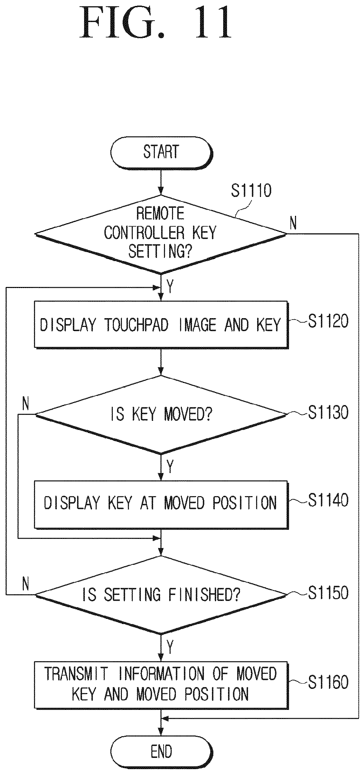

FIG. 11 is a flowchart illustrating a method for setting a remote controller key according to an embodiment of the disclosure.

Referring to FIG. 11, when a UI display command for setting a remote controller key is input at operation S1110, the display apparatus may display a key together with a touchpad image at operation S1120. The UI display command may be input through an external device such as a mobile device, or the like, a touch screen of the display apparatus itself, or an input device (keyboard, mouse, camera, microphone, joystick, etc.) connected to the display apparatus according to an embodiment.

In this state, when a key is moved according to a user operation at operation S1130, the display apparatus may display the key at the moved position at operation S1140. In this way, the user may move all keys the user wants to a touchpad image. After that, when the setting is finished at operation S1150, the display apparatus may transmit information on the moved key and information on the moved position to the remote controller at operation S 1160.

As described above, key movement and display may also be input through an external device such as a mobile device, or the like, a touch screen of the display apparatus itself, or an input device connected to the display apparatus (keyboard, mouse, camera, microphone, joystick, etc.). As a representative example of this, a case of using a mobile device has been described in the description above, and thus a redundant description thereof are omitted.

In addition, detailed operations according to the contents described in the various embodiments described above may be added to the flowchart of FIG. 11. For example, a predetermined fixed key value may be applied to keys determined by default among keys corresponding to all functions provided by the display apparatus, and when other keys are selected, an operation of generating an arbitrary key value other than the fixed key value may be added.

In addition, the configuration of the UI screen displayed in FIG. 11 may be implemented in various forms as described with reference to FIGS. 8 to 10, and detailed operations corresponding thereto may be added to the flowchart of FIG. 11. Since contents of these detailed operations are similar to those described in the other embodiments described above, redundant descriptions are omitted.

The method of FIG. 11 may be performed in a display apparatus including the configuration shown in FIG. 2, but is not limited thereto. For example, the method of FIG. 11 may be performed by a display apparatus in which some components such as a second communicator are omitted unless a user operation is received through a mobile device.

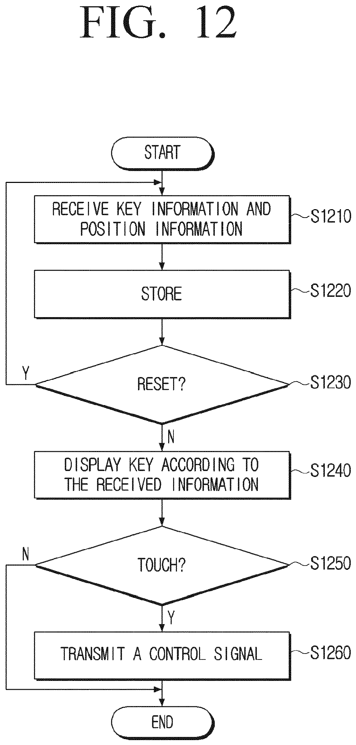

FIG. 12 is a flowchart illustrating a method of setting a remote controller key of a remote controller according to an embodiment of the disclosure.

Referring to FIG. 12, the remote controller may receive key information and position information from the display apparatus while communicating with the display apparatus at operation S1210. The remote controller may store the received information at operation S1220. Thereafter, until it is determined the remote controller key is reset in operation S1230, the remote controller may display at least one key on the touchpad based on the received information at operation S1240. The user may select a key displayed on the touchpad.

When a touch to the displayed key is detected at operation S1250, the processor of the remote controller may identify position information corresponding to a touch point, and identify a key value corresponding to the identified position information from a memory inside the remote controller. The processor may transmit a control signal corresponding to the identified key value to the display apparatus at operation S1260. A format of the control signal may vary depending on a communication method between the display apparatus and the remote controller. For example, when connected by the Bluetooth communication method, the remote controller may transmit the key value by including the key value in a Bluetooth packet.

Meanwhile, the setting of the remote controller key may be done only once when the remote controller is used for the first time, but the user may the setting from time to time afterwards. A reset of the remote controller key may be performed according to the various embodiments described above.

Depending on the embodiment, a method of resetting the remote controller key may also vary. For example, a previously set key may be displayed as it is on the touchpad image in the UI screen 10. As for the previously set key information, the display apparatus 100 may store a result performed in an initial setting process of the remote controller key, and configure the UI screen 10 based on the stored result. Alternatively, information on keys stored in the remote controller key may be provided to the display apparatus 100 during a reset operation. The user may move position of some keys among the existing keys displayed on the touchpad image of the UI screen 10 out of the touchpad image and move a new key desired by the user to the touchpad image.

In another method, when the user releases the movement while placing the new key desired by the user on the existing key on the touchpad image, the processor 150 of the display apparatus 100 may recognize the existing key as a command for replacing the existing key with the new key, and transmit a deletion command for deleting the existing key information, key information on the new key, and position information thereof to the remote controller.

In the above, various embodiments have been described with various drawings, but contents described in each embodiment are not strictly distinguished and applied, and some components may be implemented in combination with other embodiments.

As described above, according to various embodiments of the disclosure, the user directly may select keys to be used for the remote controller using the user's mobile device or other device while viewing the UI screen displayed on the display apparatus, and select a position where the key will be displayed on the remote controller.

If the remote controller has a function to distinguish and recognize users, the remote controller key setting may be different for each user. For example, in a case of a family of four, only keys desired by each family may be arranged at desired positions. The remote controller may identify the user by using fingerprint recognition or voice recognition or by directly receiving the user's identification information, and display the keys on the touchpad according to a key arrangement pattern previously set by the identified user.

In addition, although only images of keys and touchpad images are illustrated on the UI screen in the various descriptions and illustrations described above, other menus necessary for key setting may be additionally displayed. For example, various menus have been added, such as a key setting end menu for the user to end a key setting operation, a batch removal menu to remove all previously set keys from a touchpad image, and a cancel menu to cancel the key setting operation.

In addition, in the above description and illustration, the selection of the type of key to be displayed on the remote controller and the selection of the display position of the key have been mainly described, but it may be extended to a task of customizing the touchpad itself of the remote controller. Specifically, modifying a background color of the touchpad of the remote control, converting a key name to be displayed on the remote controller from Korean to English, editing the key name itself to a new name, changing size, shape, or color of the key or the like may be performed. In case of these tasks, in addition to receiving a touch operation through an operation area of the mobile device, a user operation such as displaying a soft keyboard in the mobile device and inputting various texts by the user may be added.

As described above, according to various embodiments of the disclosure, the user may easily and quickly set keys to be displayed on the touchpad of the remote controller. Particularly, it may eliminate an inconvenience of operating several times before finding a desired function.

When a program code for performing a method for setting the remote controller key according to various embodiments as described above is installed in various electronic apparatuses having a display, the electronic apparatus may execute the program code to perform the method described above. Specifically, a program code to sequentially perform displaying a UI screen including a touchpad image and a plurality of keys of a remote controller, at least one of the plurality of keys on the UI screen is moved to at least key among the plurality of keys to the touchpad image according to a user operation input through an external device connected to the display apparatus, respectively, displaying the at least one key at the moved position in the touchpad image, and transmitting key information of at least one key and the moved position of each of the at least one key to the remote controller, is installed in the electronic apparatus, the electronic apparatus may perform a remote controller key setting operation. In addition, program codes for performing the operations described in the various embodiments described above may be further included in a recording medium.

Such a program code may be configured as one application and distributed online or on a recording medium, or may be distributed in the form of firmware mounted in an electronic apparatus. The electronic apparatus in which the application is installed may provide the various functions described above.

In addition, the various embodiments as described above may be implemented in one device in whole or in combination according to some embodiments, or may be implemented individually for each embodiment.

Such program code may be distributed as recorded on various types of computer-readable media such as ROM, RAM, memory chip, memory card, external hard drive, hard disk, compact disc (CD), digital versatile disc (DVD), magnetic disk, magnetic tape, or the like. A device that has downloaded such a program code online may also perform the various operations described above.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A display apparatus comprising:
a first communicator connected to a remote controller;
a second communicator connected to an external device;
a display;
a memory; and
a processor,
wherein the processor is configured to:
control, based on a user interface (UI) display command for key setting of the remote controller being received from the external device through the second communicator, based on UI data stored in the memory, the display to display a UI screen including a touchpad image and a plurality of keys of the remote controller, and
based on at least one key among the plurality of keys on the UI screen being moved onto the touchpad image, respectively, according to a user operation input through the external device, transmit key information of the at least one key and a moved position of each of the at least one key to the remote controller through the first communicator.

2. The display apparatus of claim 1,
wherein the memory is configured to store fixed key values of keys determined as default among keys corresponding to each of all functions provided by the display apparatus, and
wherein the processor is further configured to generate, based on a key other than the keys determined as default being moved onto the touchpad image, a key value of the moved key as an arbitrary key value except for a fixed key value.

3. The display apparatus of claim 1, wherein the processor is further configured to:
align all keys used for controlling the display apparatus according a predetermined alignment criterion; and
display all the keys, and generate the UI screen to display a touchpad image corresponding to a touchpad of the remote controller next to one side of all the keys.

4. The display apparatus of claim 1, wherein the processor is further configured to generate, based on a key corresponding to an upper menu including a plurality of submenus being selected from among the plurality of keys displayed on the UI screen, the UI screen to display a plurality of keys corresponding to the plurality of submenus.

5. The display apparatus of claim 1,
wherein the external device is a mobile device, and
wherein the processor is further configured to:
control the display to move, based on a touch operation being input in the mobile device, a cursor on the UI screen according to the touch operation, and
display, based on a drag-and-drop operation being input in the mobile device in a state that the cursor is displayed on one key, a movement of the one key according to the drag-and-drop operation.

6. A method of setting a remote controller key of a display apparatus comprising:
connecting communication with an external device and a remote controller, respectively;
displaying, based on a user interface (UI) display command for key setting of the remote controller being received from the external device, a UI screen including a touchpad image and a plurality of keys of the remote controller;
based on at least one key among the plurality of keys on the UI screen being moved onto the touchpad image, respectively, according to a user operation input through the external device, displaying the at least one key at a moved position in the touchpad image, respectively; and
transmitting key information of the at least one key and a moved position of each of the at least one key to the remote controller.

7. The method of claim 6, further comprising:
generating, based on a key other than keys determined as default among keys corresponding to each of all functions provided by the display apparatus being moved onto the touchpad image, a key value of the moved key as an arbitrary key value except for a fixed key value set for the keys determined as default.

8. The method of claim 6, wherein the UI screen is configured to:
align all keys used for controlling the display apparatus according a predetermined alignment criterion; and
display all the keys, and display the touchpad image next to one side of all the keys.

9. The method of claim 6, further comprising:
generating, based on a key corresponding to an upper menu including a plurality of submenus being selected from among the plurality of keys displayed on the UI screen, the UI screen to display a plurality of keys corresponding to the plurality of submenus.

10. The method of claim 6, the displaying the at least one key at a moved position on the touchpad image include:
moving, based on a touch operation being input in a mobile device connected to the display apparatus, a cursor on the UI screen according to the touch operation; and
displaying, based on a drag-and-drop operation being input in the mobile device in a state that the cursor is displayed on one key, a movement of the one key according to the drag-and-drop operation.

11. A remote controller comprising:
a communicator configured to connect to a display apparatus;
a touchpad;
a memory; and
a processor,
wherein the processor is configured to:
store, based on a key setting function being executed and key information of at least one key and position information of the at least one key being received from the display apparatus through the communicator, the received key information and the position information in the memory, and
control the touchpad to display the at least one key at a position corresponding to the position information based on the stored received key information,
identify, based on a touch operation being input to the touchpad, the position information corresponding to a touched point,
identify a key value corresponding to the identified position information from the memory, and
transmit a control signal corresponding to the identified key value to the display apparatus through the communicator.

12. A recording medium storing a program for performing a method of setting a remote controller key of a display apparatus, the method of setting the remote controller key comprising:
displaying a user interface (UI) screen including a touchpad image and a plurality of keys of a remote controller;
displaying, based on at least one key among the plurality of keys on the UI screen being moved, respectively, onto the touchpad image according to a user operation input through an external device connected to the display apparatus, the at least one key at a moved position in the touchpad image; and
transmitting key information of the at least one key and a moved position of each of the at least one key to the remote controller.

13. The recording medium of claim 12, wherein the remote controller key setting method is configured to further include generating, based on a key other than keys determined as default among keys corresponding to each of all functions provided by the display apparatus being moved onto the touchpad image, a key value of the moved key as an arbitrary key value except for a fixed key value set for the keys determined as default.

14. The recording medium of claim 12, wherein the remote controller key setting method is configured to further include generating, based on a key corresponding to an upper menu including a plurality of submenus being selected from among the plurality of keys displayed on the UI screen, the UI screen to display a plurality of keys corresponding to the plurality of submenus.

15. A display apparatus comprising:
a communicator connected to a remote controller;
a display;
a memory; and
a processor,
wherein the processor is configured to:
control, based on a user interface (UI) display command for key setting of the remote controller being received from the remote controller through the communicator, based on UI data stored in the memory, the display to display a UI screen including a touchpad image and a plurality of keys of the remote controller, and
based on at least one key among the plurality of keys on the UI screen being moved onto the touchpad image, respectively, according to a user operation input through the remote controller, transmit key information of the at least one key and a moved position of each of the at least one key to the remote controller through the communicator.
